# EUROPEAN PATENT APPLICATION

(11) **EP 2 497 676 A2**
(43) Date of publication of application: **12.09.2012**
(21) Application number: 11195095.2
(22) Date of filing: 22.12.2011
(51) Int. Cl.: B60L 11/18

(54) **Monitoring systems and methods for providing remote notification of an electric vehicle status to a user**

(30) Priority: 03.01.2011 US 983386
(71) Applicant: General Electric Company, Schenectady, New York 12345 (US)
(72) Inventor: Yasko, Christopher Charles, Atlanta, GA 30339-8402 (US); Vukojevic, Aleksandar, Atlanta, GA 30339-8402 (US)
(74) Representative: Illingworth-Law, William Illingworth

(57) **Abstract**

A monitoring system for use with a charging station (106) is provided. The monitoring system is configured to couple to a battery (110) to be charged, receive at least one input from a user of an electric vehicle (107), determine a charging status of the battery (110) being charged, and provide a remote notification of the charging status to the user based on the at least one input received.

## Description

### BACKGROUND OF THE INVENTION

The field of the invention relates generally to charging stations and, more particularly, to a monitoring system for use in providing remote notification of a charging status of an electric vehicle to a user.

In response to increasing fuel costs related to the use of conventional combustion engine vehicles and in response to heightened concerns about global warming, the use of electric vehicles has increased. As such, energy demand has increased in the form of electrical energy used to charge batteries or other energy sources used in such vehicles. Moreover, with an increase in the number of electric vehicles being used by consumers, electric vehicle charging stations (EVCS) have become increasingly prominent throughout the world in order to provide energy to the electric vehicles.

In at least some known EVCS, a user can easily activate a unit at the station to start the flow of electrical energy into a battery located within his or her electric vehicle by passing their radio frequency identification (RFID) tag across a reader located on the unit. A typical charging time for an electric vehicle may be between approximately two hours to approximately eight hours in length. The charging time of an electric vehicle depends on various factors including, but not being limited to, environmental conditions, the size of the vehicle's battery, the charging level and the size of the charger for the battery, and state of the charge of the battery when the vehicle is coupled to the EVCS.

In addition to providing electrical energy to electric vehicles, at some known EVCS may provide other functions. For example, each EVCS may provide revenue grade metering, communications to an advanced metering infrastructure (AMI), smart grid functionality to a utility, and billing systems to a third party. However, at least some known EVCSs do not provide remote notification of a charging status of an electric vehicle. As a result, in order for a user to determine the charging status of his or her electric vehicle, the user must physically inspect the vehicle at the EVCS. As such, the charging process can be a tedious and/or time consuming task for the user. As such, not knowing when the electric vehicle is charged may impose constraints as to how far the user can travel from the charging station.

### BRIEF DESCRIPTION OF THE INVENTION

In one embodiment, a method for providing remote notification of an electric vehicle status to a user is provided. The method includes receiving at least one input from the user of the electric vehicle. A charging status of a battery being charged is determined. A remote notification of the charging status is then provided to the user based on the input received by the user.

In another embodiment, a monitoring system is provided. The monitoring system is configured to couple to a battery to be charged. The monitoring system also receives at least one input from a user of an electric vehicle. Moreover, the monitoring system determines a charging status of the battery being charged and provides a remote notification of the charging status to the user based on the input received.

In yet another embodiment, a charging station is provided. The charging station includes an energy delivery device that is coupled to an energy source for selectively supplying energy to a battery coupled within an electric vehicle. Moreover, the charging station includes a monitoring system that is coupled to the energy delivery device. The monitoring system includes at least one processor that is configured to receive at least one input from a user of the electric vehicle. The processor is also configured to determine a charging status of the battery being charged. Moreover, the processor is configured to transmit a remote notification of the charging status to the user based on the input received.

### BRIEF DESCRIPTION OF THE DRAWINGS

Fig. 1 is a block diagram of an exemplary electric vehicle charging station;

Fig. 2 is a block diagram of a monitoring system that may be used with the charging station shown in Fig. 1; and

Fig. 3 is flow chart of an exemplary method for providing remote notification of an electric vehicle status to a user using the monitoring system shown in Fig. 2.

### DETAILED DESCRIPTION OF THE INVENTION

The exemplary methods and systems described herein overcome at least some known disadvantages of known electric vehicle charging stations that provide information related to electric vehicles to users. More specifically, the embodiments described herein provide a monitoring system that may be used with an electric vehicle charging station to provide remote notification to a user of an electric vehicle regarding a charging status of an electric vehicle. In the exemplary embodiments, the monitoring system is configured to receive at least one input from the user and configured to determine a charging status of the electric vehicle. The monitoring system provides a remote notification of the charging status to the user based on the input received by the user interface. The remote notification provides a convenient approach for a user to determine the charge status of an electric vehicle without requiring the user to monitor the electric vehicle charging station to ascertain the charging status of the electric vehicle.

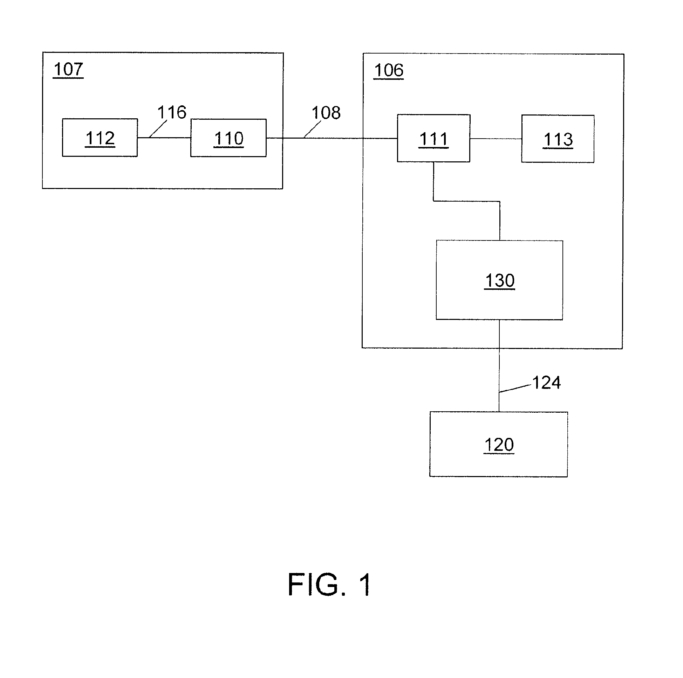

Fig. 1 is a block diagram of an electric vehicle charging station 106. In the exemplary embodiment, at least one electric vehicle 107 is coupled to charging station 106 via a conduit 108. Alternatively, electric vehicle 107 may be wirelessly coupled to charging station 106. It should be noted that, as used herein, the term "couple" is not limited to a direct mechanical, electrical, and/or communication connection between components, but may also include an indirect mechanical, electrical, and/or communication connection between multiple components.

It should also be noted that the term "electric vehicle" refers generally to a vehicle that includes one or more electric motors (not shown) that are used to provide propulsion to the vehicle. Energy, such as electrical energy, used to generate power and propel electric vehicles may come from various sources, such as, but not limited to, an on-board rechargeable battery and/or an on-board fuel cell. In one embodiment, the electric vehicle is a hybrid electric vehicle, which captures and stores energy generated by braking. Moreover, a hybrid electric vehicle uses energy stored in an electrical source, such as a battery, to continue operating when idling to conserve fuel. Some hybrid electric vehicles are capable of recharging the battery by plugging into a power receptacle, such as a general power outlet. Another example of an electric vehicle is a fuel-cell vehicle, which uses only electrical energy for propulsion. Accordingly, the term "electric vehicle" as used herein may refer to a hybrid electric vehicle, a fuel-cell vehicle, or any other vehicle to which electrical energy may be delivered via a power grid.

In the exemplary embodiment, electric vehicle 107 includes a battery 110. In the exemplary embodiment, battery 110 is a rechargeable lithium-ion battery 110. Alternatively, battery 110 may be any other lithium-based battery or any other type of battery that enables electric vehicle 107 to function as described herein.

Moreover, in the exemplary embodiment, electric vehicle 107 is coupled to an energy delivery device 111 that is included within electric vehicle charging station 106. More specifically, battery 110 is coupled to energy delivery device 111 via conduit 108. Alternatively, battery 110 is wirelessly coupled to energy delivery device 111. Moreover, in the exemplary embodiment, energy delivery device 111 is coupled to an energy source 113. Energy delivery device 111 selectively supplies energy, such as electrical energy, from energy source 113 to battery 110. Electric vehicle 107 is configured to store the electrical energy in battery 110 and to use the stored electrical energy for propulsion, rather than, or in addition to, more conventional energy sources, such as gasoline. Moreover, in the exemplary embodiment, conduit 108 is fabricated from a metallic wire. Alternatively, conduit 108 may be fabricated from any other substance or compound that enables conduit 108 to deliver electrical energy to electric vehicle 107 and that enables charging station 106 to function as described herein.

Moreover, in the exemplary embodiment, electric vehicle 107 also includes a vehicle communication module 112 that is coupled to battery 110 via a conduit 116. In the exemplary embodiment, vehicle communication module 112 is also wirelessly coupled to charging station 106 to enable electric vehicle 107 to communicate with charging station 106. More specifically, module 112 enables electric vehicle 107 to communicate the amount of an electrical charge that is received by battery 110 to charging station 106. Alternatively, module 112 may enable electric vehicle 107 to communicate any other information regarding electric vehicle 107 to charging station 106.

Moreover, charging station 106 communicates with at least one notification device 120 that is communicatively coupled to charging station 106 via a network 124. More specifically, user notification device 120 is coupled to a monitoring system 130 within charging station 106 via network 124. In the exemplary embodiment, network 124 may include, but is not limited to, the Internet, a local area network (LAN), a wide area network (WAN), a wireless LAN (WLAN), a mesh network, and/or a virtual private network (VPN). User notification device 120 enables a user (not shown) to receive knowledge of a charging status of battery 110 of electric vehicle 107.

Moreover, in the exemplary embodiment, monitoring system 130 is coupled within charging station 106. More specifically, monitoring system 130 is coupled to energy delivery device 111. Alternatively, monitoring system 130 may not be coupled within charging station 106 and may be coupled within another apparatus and/or system, such as electric vehicle 107.

In the exemplary embodiment, user notification device 120 is a cellular phone and/or a computer system. Alternatively, user notification device 120 may be any other device that enables user notification device 120 and/or charging station 106 to function as described herein. Moreover, in the exemplary embodiment, charging station 106 and user notification device 120 communicate with each other and/or network 124 using wireless communication means, such as a cellular phone technology (e.g., the Global Standard for Mobile communication (GSM)). Alternatively, charging station 106 and user notification device 120 may communicate with each other and/or network 124 using other means, such as wired network connection (e.g., Ethernet or an optical fiber), the Worldwide Interoperability for Microwave Access (WIMAX) standard, other wireless communication means, such as radio frequency (RF), an Institute of Electrical and Electronics Engineers (IEEE) 802.11 standard (e.g., 802.11(g) or 802.11(n)), a satellite communication link, and/or any other suitable communication means. WIMAX is a registered trademark of WiMax Forum, of Beaverton, Oregon. IEEE is a registered trademark of Institute of Electrical and Electronics Engineers, Inc., of New York, New York.

During operation, when a state of charge of electric vehicle battery 110 is below a desired charge level, a user can go to charging station 106 and provide at least one input to charging station 106. More specifically, in the exemplary embodiment, the user inputs whether the user wants to receive notification regarding the charging status of electric vehicle 107 and the manner in which the user want the pertinent information reported. The user also couples electric vehicle 107 to energy delivery device 111 within charging station 106. When electric vehicle 107 is coupled to energy delivery device 111, electrical energy is transmitted from energy delivery device 111 to battery 110 via conduit 108.

As battery 110 is being charged, a charging status for the battery 110 is transmitted to charging station 106 via vehicle communication module 112. Monitoring system 130 determines the charging status of battery 110 based on input provided by the user. Monitoring system 130 then communicates the determined charging status to user notification device 120 to enable user to receive an indication of the charging status of battery 110.

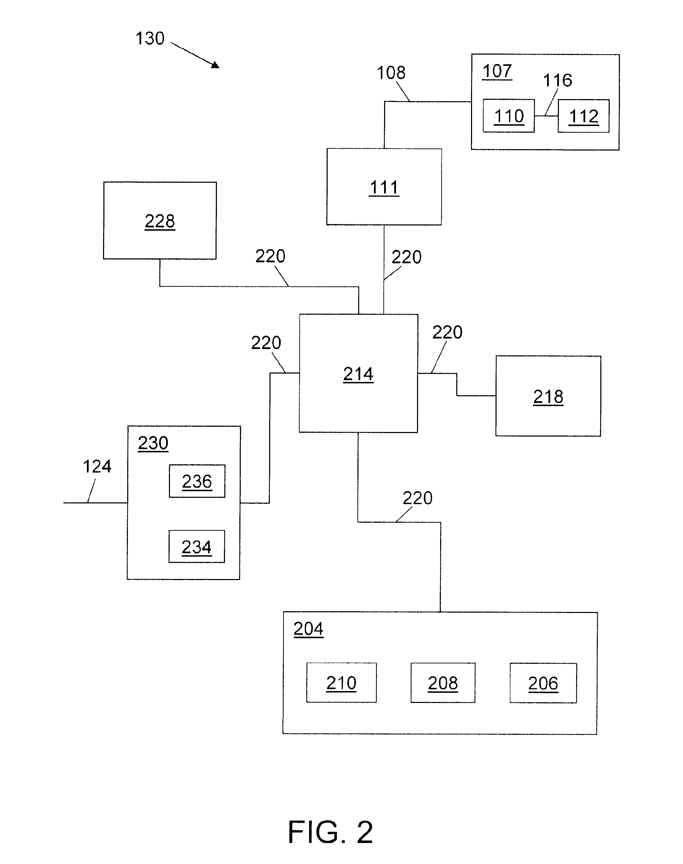

Fig. 2 is a block diagram of monitoring system 130. Monitoring system 130 includes a user interface 204 that receives at least one input from a user (not shown). In the exemplary embodiment, user interface 204 includes a keyboard 206 that enables a user to input pertinent information. Alternatively, user interface 204 may include, for example, a pointing device, a mouse, a stylus, a touch sensitive panel (e.g., a touch pad or a touch screen), a gyroscope, an accelerometer, a position detector, and/or an audio input interface (e.g., including a microphone).

In the exemplary embodiment, user interface 204 also presents information, such as input events and/or validation results, to the user. In the exemplary embodiment, user interface 204 includes a display adapter 208 that is coupled to at least one display device 210. More specifically, in the exemplary embodiment, display device 210 is a visual display device, such as a cathode ray tube (CRT), a liquid crystal display (LCD), an organic LED (OLED) display, and/or an "electronic ink" display. Alternatively, user interface 204 may include an audio output device (e.g., an audio adapter and/or a speaker) and/or a printer.

Moreover, in the exemplary embodiment, user interface 204 receives information related to the user, electric vehicle 107 and/or charging status of electric vehicle 107. More specifically, in the exemplary embodiment, user interface 204 receives the user's payment method information, such as a credit card number and/or debit card number. User interface 204 also prompts the user to determine the user's preferences to receiving periodical updates via user notification device 120 (shown in Fig. 1) regarding the charging status of battery 110 of electric vehicle 107. Moreover, in the exemplary embodiment, user interface 204 receives a confirmation from the user regarding the user's update status preferences.

Moreover, in the exemplary embodiment, user interface 204 also receives at least one unique identifier from the user. In the exemplary embodiment, the unique identifier is a phone number, including a mobile phone number, a uniform resource locator (URL), an internet protocol (IP) address, and/or an email address. Alternatively, the unique identifier may be any other identifier that enables charging station 106 and monitoring system 130 to function as described herein. User interface 204 also receives the user's preferences regarding a desired type of report or update regarding the charging status. More specifically, in the exemplary embodiment, the user can input whether the report or update is provided in percentages and/or time intervals. For example, the charging status can be reported in preset percentages, such 50%, 75%, 100% and/or in preset time intervals, such as thirty minutes intervals. Moreover, in the exemplary embodiment, the user can input whether the report or update is provided in an amount of a distance electric vehicle 107 can travel. For example, the charging status can be reported in the number of miles and/or kilometers electric vehicle 107 can travel depending on the charge of electric vehicle battery 110. Alternatively, a user may input any other type of desired reporting method or update regarding the charging status of battery 110 of electric vehicle 107.

Monitoring system 130 also includes a processor 214 and a memory device 218. In the exemplary embodiment, processor 214 is coupled to user interface 204 and to memory device 218 via a system bus 220. In the exemplary embodiment, processor 214 communicates with the user, such as by prompting the user via user interface 204 and by receiving user inputs via user interface 204. Moreover, in the exemplary embodiment, processor 214 is programmed by encoding an operation using one or more executable instructions and providing the executable instructions in memory device 218. The term "processor" refers generally to any programmable system including systems and microcontrollers, reduced instruction set circuits (RISC), application specific integrated circuits (ASIC), programmable logic circuits (PLC), and any other circuit or processor capable of executing the functions described herein. The above examples are exemplary only, and thus are not intended to limit in any way the definition and/or meaning of the term "processor."

In the exemplary embodiment, memory device 218 is one or more devices that enable information, such as executable instructions and/or other data, to be stored and retrieved. Moreover, in the exemplary embodiment, memory device 218 includes one or more computer readable media, such as, without limitation, dynamic random access memory (DRAM), static random access memory (SRAM), a solid state disk, and/or a hard disk. In the exemplary embodiment, memory device 218 stores, without limitation, application source code, application object code, configuration data, additional input events, application states, assertion statements, validation results, and/or any other type of data. More specifically, in the exemplary embodiment, memory device 218 stores input data received by the user via user interface 204 and information received from electric vehicle 107.

Monitoring system 130, in the exemplary embodiment, also includes a monitoring device 228 and a communication interface 230 that are each coupled to processor 214 via system bus 220. Moreover, energy delivery device 111 is coupled to processor 214 via system bus 220.

In the exemplary embodiment, monitoring device 228 is coupled to electric vehicle 107. More specifically, monitoring device 228 is coupled to vehicle communication module 112 via a wireless connection. Alternatively, monitoring device 228 and vehicle communication module 112 may be coupled via a cable or a connector. Further, in the exemplary embodiment, monitoring device 228 receives the charging status of battery 110 from electric vehicle 107 via vehicle communication module 112.

Moreover, in the exemplary embodiment, communication interface 230 is communicatively coupled to user notification device 120 (shown in Fig. 1) via network 124. Further, communication interface 230 includes at least one adaptor, such as adaptor 234 and adaptor 236. In the exemplary embodiment, adaptor 234 is a wireless network adaptor and adaptor 236 is a mobile telecommunications adaptor. Alternatively, communication interface 230 may include any other type of adaptor, such as a wired network adaptor, that enables monitory system 130 and charging station 106 to function as described herein.

In the exemplary embodiment, communication interface 230 communicates with user notification device 120. More specifically, communication interface 230 communicates a current charging status of battery 110 of electric vehicle 107 to user notification device 120. In the exemplary embodiment, communication interface 230 provides notification to user notification device 120 based on the at least one unique identifier provided to user interface 204. More specifically, in the exemplary embodiment, communication interface 230 provides the user an indication of the charging status via an e-mail and/or phone message, such as a text message. Alternatively, communication interface 230 may provide the user the charging status of electric vehicle 107 via any other means that enables charging station 106 and monitoring system 130 to function as described herein.

Moreover, communication interface 230 provides a user a report or an update regarding the charging status based on the user's input preferences provided to user interface 204. More specifically, in the exemplary embodiment, communication interface 230 provides the notification of the charging status in percentages and/or time intervals. Alternatively, communication interface 230 may provide any other reporting method or update the user desires regarding the charging status of battery 110.

During operation, when a charge on battery 110 of electric vehicle 107 is below a desired charge level, a user takes electric vehicle 107 to charging station 106. The programmed instructions of processor 214 are transferred from memory device 218 to display device 210. The user is prompted to input credit card and/or debit card information to user interface 204. The user in then prompted to input the desired preferences regarding receiving notification of the charging status of electric vehicle 107.

If the user inputs a desire to receive notification, user interface 204 will prompt the user to input at least one unique identifier, such as their e-mail address, a uniform resource locator (URL), an internet protocol (IP) address and/or their phone number. In the exemplary embodiment, the user is then prompted to identify their preferences regarding how the charge status is to be provided (i.e., in percentages, time intervals, and/or distance). The responses and data input by the user to user interface 204 are received by processor 214 and stored in memory device 218.

Subsequently, the user also couples battery 110 of electric vehicle 107 to energy delivery device 111 to enable electrical energy to be delivered from energy delivery device to battery 110. While battery 110 is charging, a charging status of battery is transmitted to charging station 106 via communication module 112. More specifically, in the exemplary embodiment, the charging status is communicated to monitoring device 228. Monitoring device 228 transmits the charging status to processor 214 and to memory device 218. When the charging status is approximately equal to a predefmed threshold level based on the input provided by the user as how the charge status is to be provided (i.e., in percentages, time intervals, and/or distance), processor 214 then transmits the charging status of battery 110 that correlates to the predefined threshold level to communication interface 230. Communication interface 230 then transmits a notification regarding the charging status of battery to user notification device 120. The notification is based on the input provided to user interface 204. For example, if the user provided a cellular phone number as the unique identifier, then communication interface 230 transmits a text message of the notification to the phone number provided. Moreover, in the exemplary embodiment, communication interface 230 provides the notification regarding the charge status in a percentage, time interval, and/or distance. The user then receives the charging status via user notification device 120 and, thus receives knowledge of the charging status of electric vehicle 107 to the user.

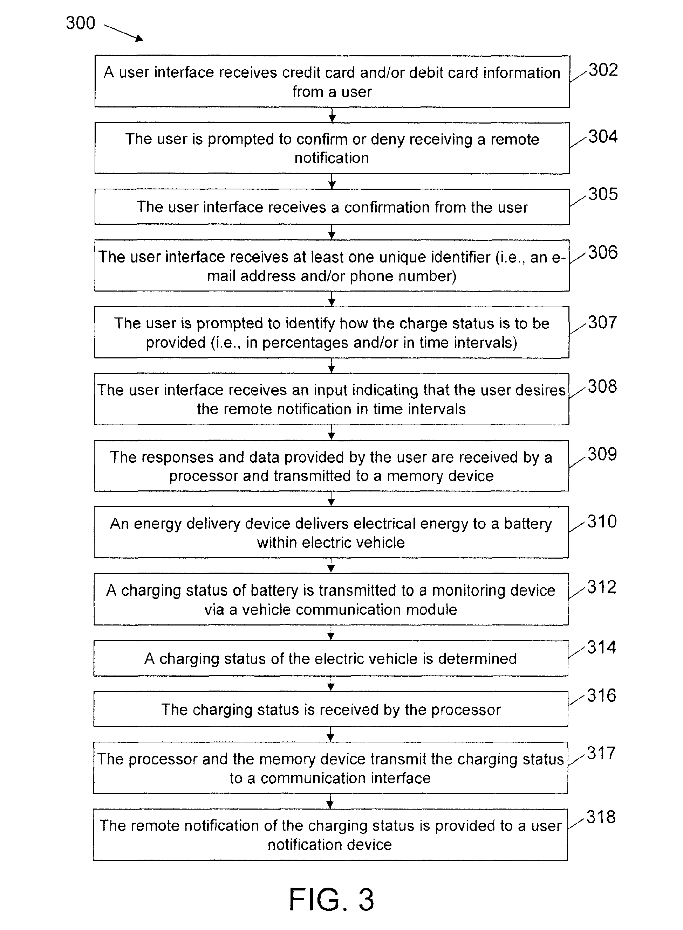

Fig. 3 is flow chart of an exemplary method 300 that may be used to provide remote notification of an electric vehicle status to a user using a monitoring system, such as monitoring system 130. In the exemplary embodiment, a user interface 204 (shown in Fig. 2) receives 302 credit card and/or debit card information from a user. The user is then prompted 304 to confirm or deny whether the user desires to receive remote notification of a charging status of an electric vehicle 107 (shown in Figs. 1 and 2). User interface 204 receives 305 a confirmation from the user that the user desires to receive a remote notification of the determined charging status of electric vehicle 107. Moreover, in the exemplary embodiment, user interface 204 receives 306 at least one unique identifier, such as an e-mail address, a uniform resource locator (URL), an internet protocol (IP) address and/or their phone number from the user, wherein the remote notification of a charging status of the electric vehicle is provided to the user based on the unique identifier.

The user is then prompted 307 to identify their preferences regarding how the charge status is to be provided (i.e., in percentages, distance, and/or time intervals). In the exemplary embodiment, user interface then receives 308 an input indicating that the user desires the notification regarding the charge status in time intervals. The responses and data that user provides are received 309 by a processor 214 (shown in Fig. 2) and then transmitted to a memory device 218 (shown in Fig. 2) such that memory device 218 is able to store the information.

Moreover, an energy delivery device 111 (shown in Fig. 2) that is coupled to electric vehicle 107 delivers 310 electrical energy to a battery 110 (shown in Figs. 1 and 2) within electric vehicle 107. A charging status of battery 110 is transmitted 312 to a monitoring device 228 (shown in Fig. 2) via a vehicle communication module 112 (shown in Fig. 1). In the exemplary embodiment, monitoring device 228 determines 314 a charging status of electric vehicle 107. The determined charging status is then received 316 by processor 214. When the charging status of battery 110 is approximately equal to a predefined threshold level based on the input provided by the user as how the charge status is to be provided, processor 214 and memory device 218 then transmit 317 the determined charging status to a communication interface 230 (shown in Fig. 2).

In the exemplary embodiment, the remote notification of the determined charging status is provided 318 via communication interface 230 to a user notification device 120 (shown in Fig. 1) based on the unique identifier provided by the user. In the exemplary embodiment, communication interface 230 provides remote notification of the determined charging status in time intervals to the user. Method 300 enables the user to have knowledge of the charging status of battery 110 without having to physically be located at charging station 106.

As compared to known electric vehicle charging stations, the above-described embodiments provide remote notification of a charging status of an electric vehicle to a user in order to prevent the charging process from being a tedious and/or time consuming task for the user. More specifically, the embodiments described herein provide a monitoring system that may be used with an electric vehicle charging station to provide remote notification to a user of an electric vehicle regarding a charging status of an electric vehicle. In the exemplary embodiments, the monitoring system is configured to receive at least one input from the user and configured to determine a charging status of the electric vehicle. The monitoring system provides a remote notification of the charging status to the user based on the input received by the user interface. The remote notification provides a convenient approach for a user to determine the charge status of an electric vehicle without requiring the user to monitor the electric vehicle charging station to ascertain the charging status of the electric vehicle.

Exemplary embodiments of systems and methods for use in providing remote notification of an electric vehicle status to a user are described above in detail. The systems and methods are not limited to the specific embodiments described herein, but rather, components of each system and/or steps of each method may be utilized independently and separately from other components and/or steps described herein. For example, each system may also be used in combination with other systems and methods, and is not limited to practice with only systems as described herein. Rather, the exemplary embodiment can be implemented and utilized in connection with many other applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method for providing remote notification of an electric vehicle status to a user, said method comprising:
   receiving at least one input from the user of the electric vehicle;
   determining a charging status of a battery being charged; and
   providing a remote notification of the charging status to the user based on the at least one input received.
2. A method in accordance with Clause 1 further comprising receiving a confirmation from the user that the user wants to receive the remote notification of the charging status.
3. A method in accordance with Clause 1 or Clause 2, further comprising:
   receiving at least one unique identifier from the user; and providing the remote notification of the charging status to the user based on the at least one unique identifier.
4. A method in accordance with any preceding Clause, wherein receiving at least one unique identifier further comprises receiving at least one of an email address, a phone number, a universal resource locator, and an internet protocol address from the user.
5. A method in accordance with any preceding Clause, wherein providing a remote notification of the charging status further comprises providing a remote notification in a distance measurement to the user.
6. A method in accordance with any preceding Clause, wherein providing a remote notification of the charging status further comprises providing a remote notification in a percentage to the user.
7. A method in accordance with any preceding Clause, wherein providing a remote notification of the charging status further comprises providing a remote notification in a time interval to the user.
8. A monitoring system for use with a charging station, said monitoring system configured to:
   couple to a battery to be charged;
   receive at least one input from a user of an electric vehicle;
   determine a charging status of the battery being charged; and
   provide a remote notification of the charging status to the user based on the at least one input received.
9. A monitoring system in accordance with Clause 8, further configured to receive a confirmation from the user that the user wants to receive the remote notification of the charging status.
10. A monitoring system in accordance with Clause 8 or Clause 9, further configured to:
   receive at least one unique identifier from the user; and
   provide the remote notification of the charging status to the user based on the at least one unique identifier.
11. A monitoring system in accordance with Clause 10, wherein the at least one unique identifier is an e-mail address, a phone number, a universal resource locator, and an internet protocol address.
12. A monitoring system in accordance with any of Clauses 8 to 11, further configured to provide the remote notification of the charging status in a distance measurement.
13. A monitoring system in accordance with any of Clauses 8 to 12, further configured to provide the remote notification of the charging status in a percentage.
14. A monitoring system in accordance with any of Clauses 8 to 13, further configured to provide the remote notification of the charging status in a time interval.
15. A charging station comprising:
   an energy delivery device coupled to an energy source for selectively supplying energy to a battery coupled within an electric vehicle;
   a monitoring system coupled to said energy delivery device, said monitoring system comprising at least one processor configured to:
      receive at least one input from a user of the electric vehicle;
      determine a charging status of the battery being charged; and
      transmit a remote notification of the charging status to the user based on the at least one input received.
16. A charging station in accordance with Clause 15, wherein said at least one processor is further configured to receive a confirmation from the user that the user wants to receive the remote notification of the charging status.
17. A charging station in accordance with Clause 15 or Clause 16, wherein said at least one processor is further configured to:
   receive at least one unique identifier from the user; and
   transmit the remote notification of the charging status to the user based on the at least one identifier.
18. A charging station in accordance with any of Clauses 15 to 17, wherein the at least one unique identifier is at least one of an email address, a phone number, a universal resource locator, and an internet protocol address.
19. A charging station in accordance with any of Clauses 15 to 18, wherein said at least one processor is further configured to transmit the remote notification of the charging status in at least one of a percentage and a time interval.
20. A charging station in accordance with any of Clauses 15 to 19, wherein said at least one processor is further configured to transmit the remote notification of the charging status in a distance measurement.

## Claims

1. A monitoring system (130) for use with a charging station (106), said monitoring system configured to:
couple to a battery (110) to be charged;
receive at least one input from a user of an electric vehicle (107);
determine a charging status of the battery being charged; and
provide a remote notification of the charging status to the user based on the at least one input received.

2. A monitoring system (130) in accordance with Claim 1, further configured to receive (305) a confirmation from the user that the user wants to receive the remote notification of the charging status.

3. A monitoring system (130) in accordance with Claim 1 or Claim 2, further configured to:
receive (306) at least one unique identifier from the user; and
provide (318) the remote notification of the charging status to the user based on the at least one unique identifier.

4. A monitoring system (130) in accordance with any preceding Claim, wherein the at least one unique identifier is an e-mail address, a phone number, a universal resource locator, and an internet protocol address.

5. A monitoring system (130) in accordance with any preceding Claim, further configured to provide the remote notification of the charging status in a distance measurement.

6. A monitoring system (130) in accordance with any preceding Claim, further configured to provide the remote notification of the charging status in a percentage.

7. A monitoring system (130) in accordance with any preceding Claim, further configured to provide the remote notification of the charging status in a time interval.

8. A charging station (106) comprising:
an energy delivery device (111) coupled to an energy source (113) for selectively supplying energy to a battery (110) coupled within an electric vehicle (107);
a monitoring system (130) coupled to said energy delivery device, said monitoring system comprising at least one processor (214) configured to:
receive at least one input from a user of the electric vehicle;
determine a charging status of the battery being charged; and
transmit a remote notification of the charging status to the user based on the at least one input received.

9. A charging station (106) in accordance with Claim 8, wherein said at least one processor (214) is further configured to receive (305) a confirmation from the user that the user wants to receive the remote notification of the charging status.

10. A charging station (106) in accordance with Claim 8 or Claim 9, wherein said at least one processor (214) is further configured to:
receive (306) at least one unique identifier from the user; and
transmit (318) the remote notification of the charging status to the user based on the at least one identifier.
